# EUROPEAN PATENT SPECIFICATION

(11) **EP 2 944 419 B1**
(45) Date of publication and mention of the grant of the patent: **22.03.2017**
(21) Application number: 15167074.2
(22) Date of filing: 11.05.2015
(51) Int. Cl.: B23Q 1/60, B27M 1/00, B23Q 3/06, B23Q 39/02

(54) **MACHINING CENTER WITH SEPARABLE WORKPIECE SUPPORTING TABLE**
BEARBEITUNGSZENTRUM MIT TRENNBAREM WERKSTÜCKAUFLAGETISCH
CENTRE D'USINAGE AVEC TABLE DE SUPPORT DE PIÈCE SÉPARABLE

(30) Priority: 12.05.2014 IT FI20140109
(43) Date of publication of application: 18.11.2015
(73) Proprietor: Paolino Bacci S.r.l., 56021 Cascina, (PI) (IT)
(72) Inventor: Ruggieri, Alberto, 56025 Pontedera (PI) (IT)
(74) Representative: Mannucci, Michele

(56) References cited:
- EP-A1- 0 562 216
- WO-A1-2013/168062

## Description

### Technical field

The present invention relates to improvements to numerically controlled machining centers. Some embodiments described herein relate to improvements to machining centers for machining by chip removal of pieces of wood, plastic, metal (especially light metals such as aluminum and its alloys). Some embodiments relate to machining centers equipped with systems for alternatively clamping and machining: elongated, linear or curved workpieces, for example table or chair legs, portions of window and door frames or the like; and flat workpieces, for example panels of furniture, doors, table tops or the like.

### Background art

EP 0562216 describes a machining center with a machining head carried by a portal structure. Under the portal a guide is arranged, on which two workpiece supporting tables slide independent from one another. On each workpiece supporting table systems are provided for supporting and clamping the workpieces to be machined. The supporting and clamping systems are movable in turn along auxiliary guides carried by the two workpiece supporting tables. Each supporting system is movable along the auxiliary guides to be set in the desired position along the respective workpiece supporting table.

For manufacturing articles made of wood, plastic, aluminum or other alloys, machining centers exist, which are equipped with at least one numerically controlled machining head, with one or more tools movable according to a plurality of numerically controlled axes. A base is usually associated with the machining head, on which one or more workpiece supporting tables are positioned. With the workpiece supporting tables there must be associated clamping members of the workpieces to be machined. The shape of the clamping members is greatly influenced by the shape of the workpiece to be machined and it is often necessary to stop the machining center to set-up the workpiece supporting table with appropriate clamping and supporting systems of the workpieces to be machined. The machine downtime causes loss of machining. The operations required to set-up the machining center are laborious and require skilled and costly labor.

There is therefore the need to produce a machining center that completely or partially solves at least one of the problems of the prior art.

### Summary of the invention

According to embodiments described herein, a machining center for machining workpieces made of wood, plastic, metal or the like is provided, comprising a machining head movable according to a plurality of numerically controlled axes, and a base associated with the machining head. Advantageously, along the base there is arranged a guide with which there is associated at least one workpiece supporting table, divided into a first table portion and into a second table portion. At least the first table portion is movable according to a numerically controlled axis, along the guide arranged on the base. Preferably in some embodiments also the second table portion is movable along the guide arranged on the base. A first clamping system of workpieces to be machined can be associated with the first table portion. Respective auxiliary guides, parallel to the guide arranged on the base, are advantageously combined to the first table portion and the second table portion. In advantageous embodiments the auxiliary guides of the first table portion and the auxiliary guides of the second table portion are arranged in mutual alignment, when the two portions of workpiece supporting table are set next to one another. One or more supporting members of the workpieces to be machined can be associated with the workpiece supporting table, each supporting member being provided with guide elements for engaging alternatively with the auxiliary guides of the first table portion and of the second table portion. Moreover, each supporting member can advantageously be provided with a respective second clamping system of the workpieces to be machined. By means of the auxiliary guides, the supporting members can be transferred from one to the other of the two portions of the workpiece supporting table and can be arranged (independently from one another) in machining position on the first table portion or in standby position on the second table portion.

The combination of the elements indicated above allows the machining center to be set up rapidly to machine workpieces of different shapes and/or that require different machining operations.

Further advantageous features and embodiments of the machining center according to the invention are indicated in the dependent claims.

### Brief description of the drawings

The invention will be better understood by following the description and accompanying drawing, which shows practical, non-limiting embodiments of the invention. More specifically, in the drawing:
Fig.1 shows a side view of a machining center in one embodiment;
Figs. 2, 3 and 4 show views according to II-II, III-III and IV-IV of Fig.1, respectively;
Fig. 5 shows a side view analogous to Fig. 1, in a different operating condition of the machining center;
Fig. 6 shows a plan view according to VI-VI of Fig. 5;
Fig. 7 shows a side view of a machining center in a further embodiment;
Figs. 8, 9 and 10 show views according to VIII-VIII, IX-IX and X-X of Fig.7, respectively;
Fig.11 shows a view analogous to the view of Fig. 7, in a different operating condition of the machining center;
Fig. 12 shows a plan view according to XII-XII of Fig. 11;
Fig. 13 shows a view similar to the view of Fig. 1 of a machine tool or machining center in a further embodiment; and
Figs. Figs. 14, 15 and 16 show views and sections according to the lines XIV-XIV, XV-XV and XVI-XVI respectively of Fig. 13.

### Detailed description of embodiments

The following detailed description of embodiments given by way of example refers to the accompanying drawings. The same reference numbers in different drawings are used to identify equal or similar elements. Furthermore, the drawings are not necessarily to scale. The following detailed description does not limit the invention. Rather, the scope of the invention is defined by the accompanying claims. Throughout the description, any reference to "an embodiment" or "the embodiment" or "some embodiments" means that a particular feature, structure or element described in relation to an embodiment is included in at least one embodiment of the object described. Therefore the phrase "in an embodiment" or "in the embodiment" or "in some embodiments" at various points of the description does not necessarily refer to the same embodiment(s). Furthermore, the particular features, structures or elements may be combined in any appropriate manner in one or more embodiments.

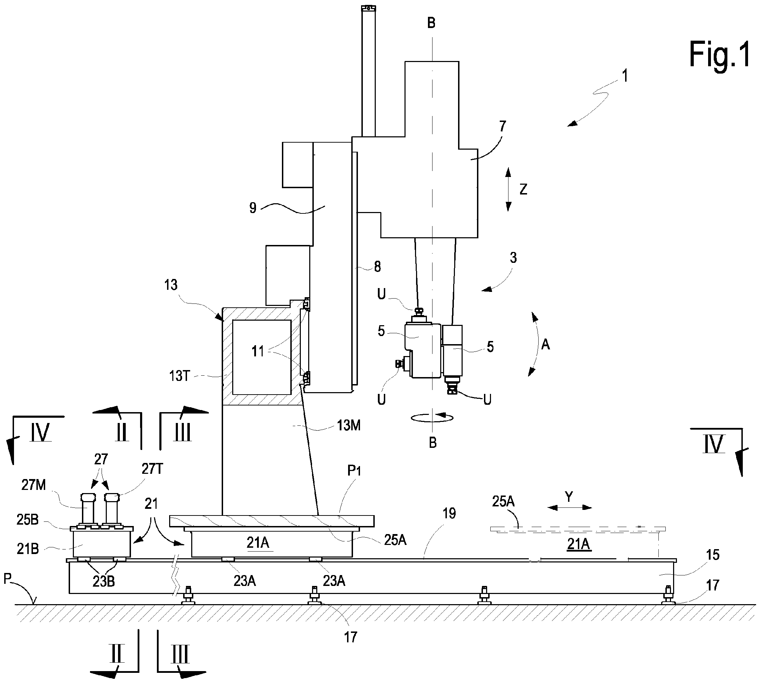

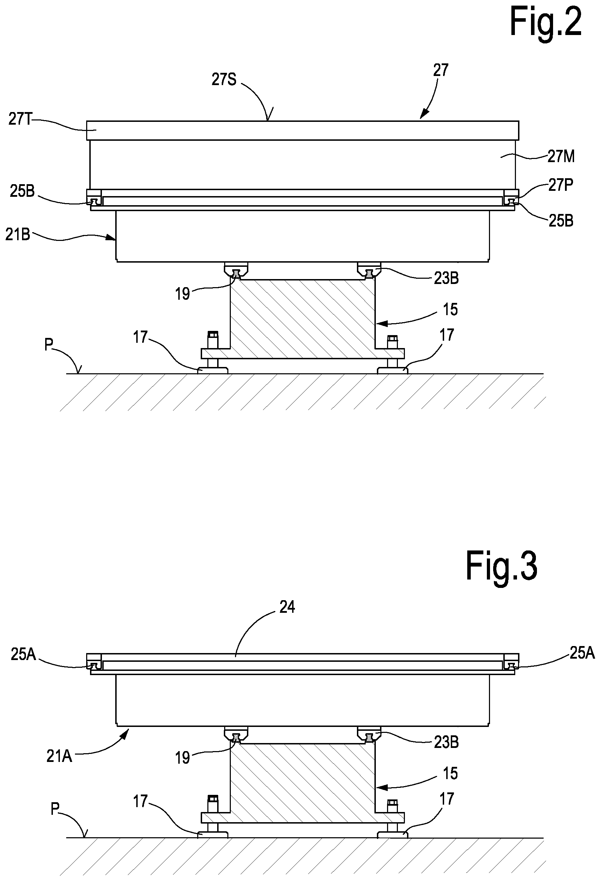

With initial reference to Figs. 1 to 6, in one embodiment the machining center 1 comprises a machining head 3 provided with a plurality of electro-spindles 5 for tools U. In some embodiments the rotation axes of the electro-spindles 5 can be orthogonal to one another. The machining head 3 can have, for example, a cross-shaped arrangement of electro-spindles 5. In possible embodiments, the machining head 3 can be provided with a first rotation movement about a first numerically controlled rotation axis, schematically indicated with A.

The machining head can be provided with a second numerically controlled rotation axis according to a further rotation axis schematically indicated with B. The two rotating axes can advantageously be orthogonal to one another, for example one horizontal and the other vertical.

The machining head 3 can be carried by a slide 7, which can be provided with a numerically controlled movement according to a numerically controlled translation axis schematically indicated with Z, for example oriented vertically. In embodiments of the invention, the slide 7 can slide along guides 8 carried by a carriage or second slide 9. The second slide 9 can be movable along a further numerically controlled translation axis X. The movement can be guided on guides 11.

In some embodiments, the guides 11 can be integral with a load-bearing structure fixed to the floor P and schematically indicated with 13. In some embodiments, the load-bearing structure can comprise an upright, or can be a portal structure. In the diagram of Fig.1 the load bearing structure is a portal with uprights 13M and a cross member 13T, on which the guide 11 is fitted.

The tools U of the machining head 3 can therefore move with respect to the load-bearing structure 13 with a numerically controlled movement according to the two translation axes X and Z and according to the two rotation axes A and B. In other embodiments, a different number of numerically controlled axes, greater than four or less than four, can be provided to move the tools U.

A base 15 can be associated with the load bearing structure 13 and therefore with the machining head 3. The base 15 usually has an elongated structure, i.e. with a longitudinal dimension greater than the two transverse dimensions. The longitudinal dimension of the base 15 can be orthogonal to the directions of the movements according to the axes X and Z.

The base 15 can be made of an extruded profile, for example with a generally approximately quadrangular cross section, so as to obtain a sufficiently rigid structure at reduced cost. The base 15 can have feet 17 for fixing to the floor P.

In some embodiments, to the base 15 elements forming a guide 19 are fitted, which extends parallel to the longitudinal dimension of the base 15. Preferably, the guide 19 is positioned in the upper area of the base 15. The guide 19 is advantageously horizontal and orthogonal to the guides that define the movement along the numerically controlled axes X and Z.

A workpiece supporting table, indicated as a whole with 21, is engaged and slides on the guide 19. In the embodiment illustrated, the workpiece supporting table 21 is divided into a first table portion 21A and into a second table portion 21 B. The first table portion 21A can be provided with sliding blocks 23A, which engage with the guide 19. The first table portion 21A can in this way move along the guide 19 according to a third numerically controlled axis, indicated with Y, advantageously orthogonal to the axes X and Z. In some embodiments, not shown, the second table portion 21 B can be fixed with respect to the base. In other embodiments, as shown in the accompanying drawings, the second table portion 21 B can be movable along the guide 19 and translate along the numerically controlled axis Y. For this purpose, the second table portion 21 B can also be provided with respective sliding blocks 23B.

The movement of the second table portion 21 B can be controlled by an actuator that is autonomous with respect to an actuator that controls the movement of the table portion 21A. In this way, the two table portions 21A, 21 B move independently from one another. The control program must be such as to prevent collisions between the two table portions.

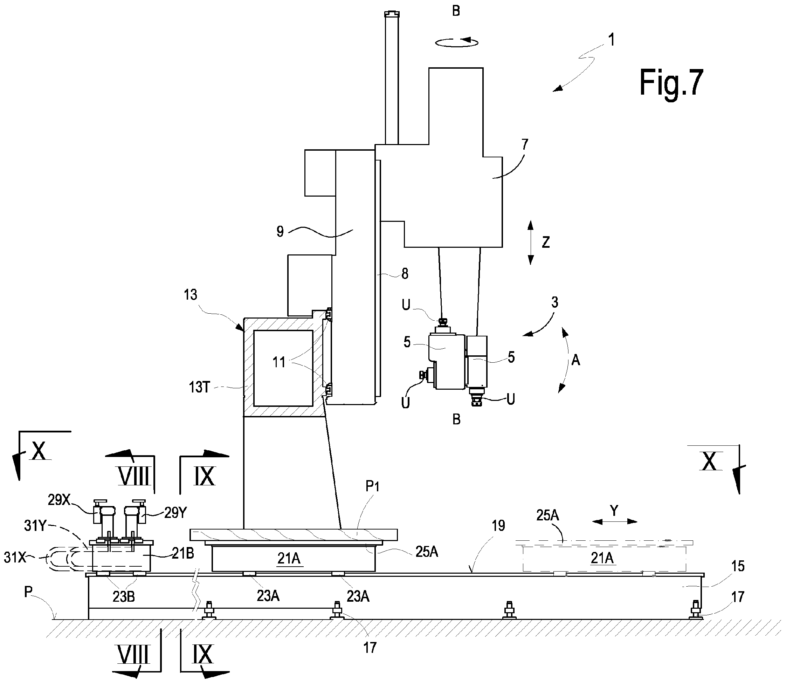

In other embodiments, described in greater detail below with reference to Figs. 7 and following, the two table portions 21A, 21 B can be configured so as to be able to be coupled or constrained to one another. In this way, one drives the other in its movement. In this case, a single actuator is sufficient to control the numerically controlled movement along the axis Y and risks of collision are avoided. Preferably, the first table portion 21A is associated with an actuator (not shown), while the second table portion 21 B is moved driven by the first. The actuator can comprise an electric motor that operates a threaded bar engaged in a screw nut integral with the first table portion 21A, or a rack and pinion system, a belt system, a linear electric motor or any other known suitable system.

It would also be possible to provide the second table portion 21 B with an autonomous actuator, which can be used only in certain circumstances, when the second table portion 21 B is not driven by the first table portion 21A. The second actuator can be deactivated when the second table portion 21 B is constrained to the first table portion 21A and driven by this latter.

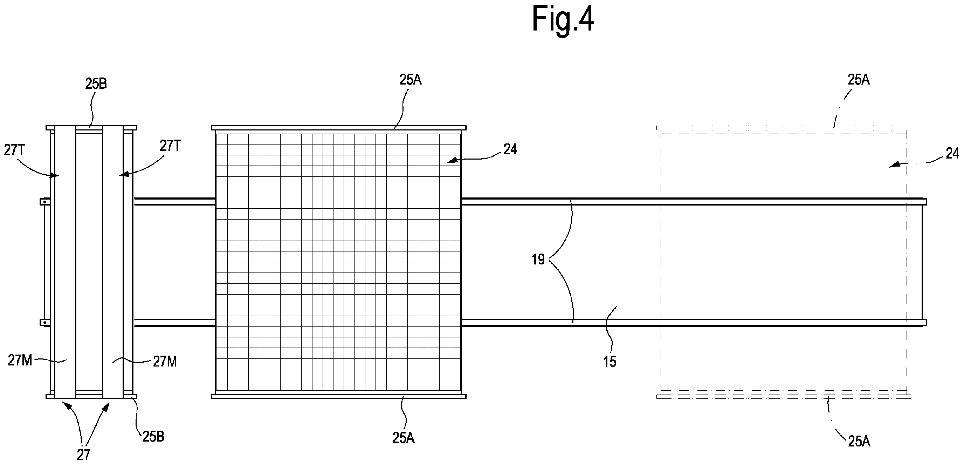

The first table portion 21A can be provided with a first clamping system of workpieces to be machined. In some embodiments the clamping system can comprise mechanical pressers. In other embodiments, as shown in the drawing, the clamping system can comprise a vacuum table 24 (Fig.4). In the embodiment, the upper surface of the vacuum table 24 forms a receiving surface of the workpieces to be machined.

In advantageous embodiments, the first portion of workpiece supporting table 21A comprises auxiliary guides 25A for the purposes that will be more apparent from the description below. The auxiliary guides 25A can advantageously be oriented parallel to the guide 19. In the embodiment shown, the auxiliary guides 25A are parallel to the rectilinear edges of the vacuum table 24.

In the same way, the second table portion 21 B can also have respective auxiliary guides 25B. The auxiliary guides 25B are arranged at the same height and at the same mutual distance as the auxiliary guides 25A, for the purposes explained below.

The workpiece supporting table 21 can be provided with a plurality of supporting members 27 for workpieces to be machined. In the configuration of Figs. 1 to 6, two of these supporting members 27 are provided. In other embodiments, one supporting member 27 or more than two supporting members 27 can be provided.

In some embodiments, each supporting member 27 can comprise an elongated element, for example in the form of a beam. The beam can be provided with a spacer, for example with an upright. In the drawing, 27T indicates the beam and 27M indicates the upright of each supporting member 27. The beam 27T forming the elongated element of the supporting member 27 preferably has a horizontal longitudinal extension, orthogonal to the guide 19.

Each beam 27T can form an upward facing supporting surface 27S on which the workpieces to be machined can be clamped.

Moreover, each supporting member 27 can comprise sliding blocks 27P that engage alternatively with the auxiliary guides 25A or with the auxiliary guides 25B, depending upon the position of the supporting members 27 with respect to the two table portions 21 A, 21 B.

The uprights 27M ensure that the supporting surface 27S of each supporting member 27 is positioned at a height greater than the height of the auxiliary guides, for the purposes that will be more apparent below. Suitable brakes, not shown, or other stopping or clamping means, allow the supporting members 27 to be fixed in the required position on one or on the other of the two table portions 21 A, 21 B of the workpiece table.

In Figs. 1 to 4, the machining center 1 is configured to machine a workpiece P1, for example a panel, clamped on the vacuum table 24. The workpiece to be machined P1 is shown only in Fig.1 for greater clarity of representation. The supporting members 27 are in standby position and are arranged on the second portion 21 B of the workpiece supporting table 21. The second portion 21 B of the workpiece supporting table remains positioned outside the machining area of the machining head 3. In this way, the machining vacuum table 24, on which the workpiece to be machined P1 is clamped, is completely free and the supporting members 27 do not impede the movements of the tools.

In the embodiment shown, the workpiece P1 is retained by suction on the table 24. It would also be possible to use other clamping systems, for example of mechanical type.

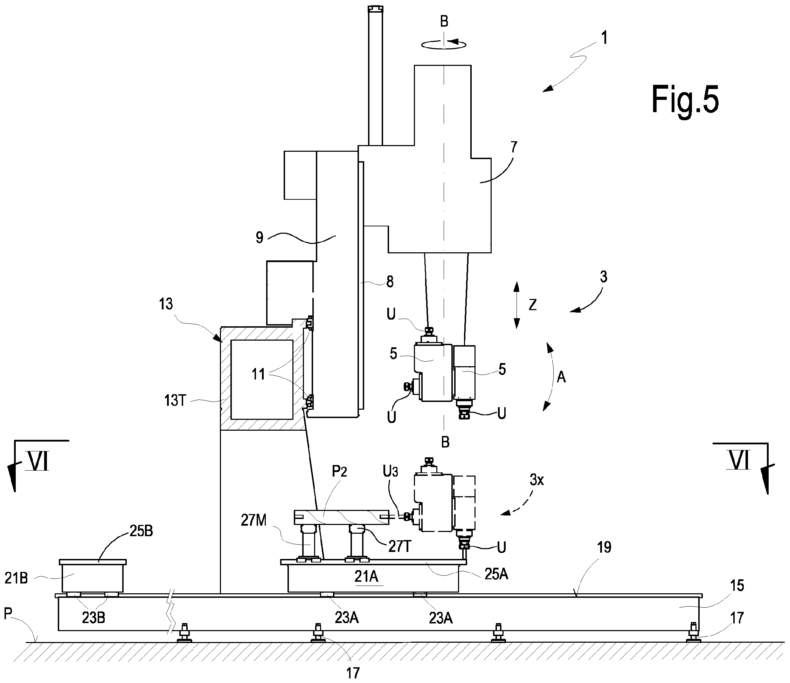

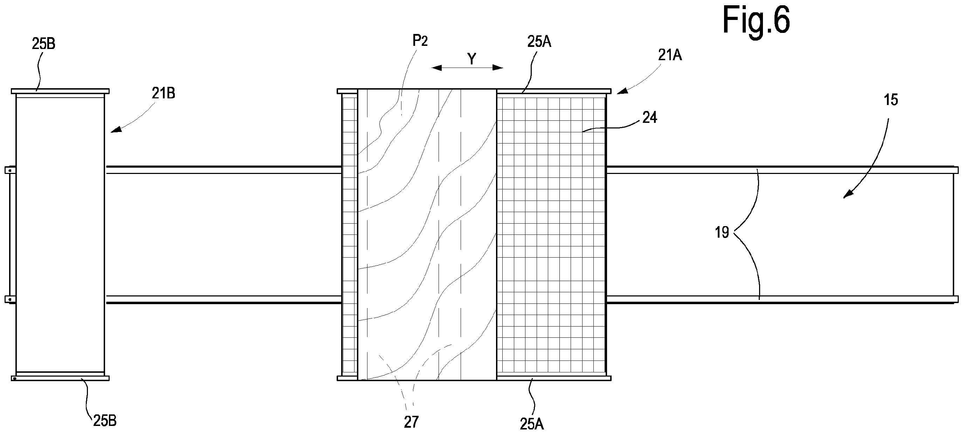

If a workpiece of different shape has to be machined, or if machining operations such as perforation, contouring or the like must be performed around the edge of the workpiece to be machined, and it is advisable for it to be held raised with respect to the table 24, it is possible to change the configuration of the machining center 1 from the one shown in Figs. 1 - 4 to the one shown in Figs. 5 and 6.

In the configuration of Figs. 5 and 6, the supporting members 27 have been transferred from the table portion 21 B to the table portion 21A. For this purpose, it is sufficient to set the two table portions 21A, 21 B of the workpiece supporting table 21 next to one another, so that the auxiliary guides 25B are aligned with the auxiliary guides 25A and in substance form an extension thereof. The supporting members 27 are simply translated from the table portion 21 B to the table portion 21A and positioned in the desired position. Fig. 5 shows a workpiece P2 to be machined, which must, for example, be perforated along the edges and which is clamped on the surfaces 27A of the supporting members 27.

Transfer and positioning of the supporting members 27 from the table portion 21 B of the workpiece supporting table to the table portion 21A of the workpiece supporting table, and vice versa, can take place by making the supporting members 27 slide by means of the respective sliding blocks 27P on the auxiliary guides 25A, 25B. In other embodiments, transfer and positioning can take place by making the supporting members 27 interact with one or more stops carried to a fixed position along the longitudinal extension of the base 15. The stop can be held in a withdrawn position when it is not required. Vice versa, when the supporting members 27 must be moved with respect to the table portions of 21A, 21 B of the workpiece supporting table, the stop can be carried to a position such as to interfere with the trajectory of the supporting members 27 or their extensions. The relative movement between each supporting member 27 and the table portions 21A, 21 B of the workpiece supporting table 21 takes place by setting the supporting member next to the stop and moving the workpiece supporting table 21 with respect to the stop, so that it moves under the related supporting member 27 held in place against the stop. This solution for moving the supporting members 27 with respect to the workpiece supporting table 21 allows high precision and automation of positioning, by means of the same numerically controlled system that controls movement of the workpiece supporting table 21 along the axis Y.

When the workpiece to be machined is fixed on the supporting members 27, the machining head 3 can move vertically to a lower position shown schematically with a broken line and indicated with 3X, where the tools U of the machining head 3 can machine the horizontal edges of the workpiece P2. This is made possible by the fact that the uprights 27M of the supporting members 27 hold the workpiece P2 raised with respect to the table 24.

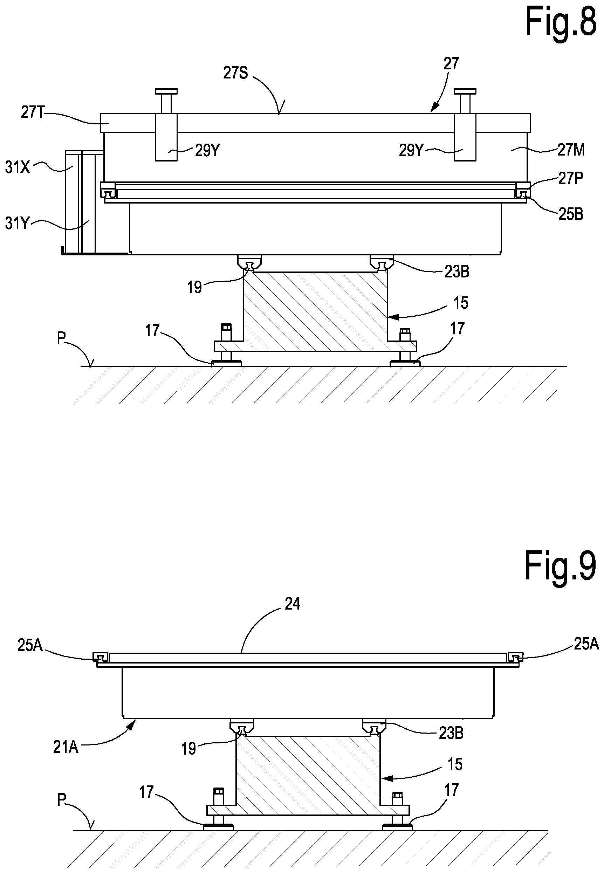

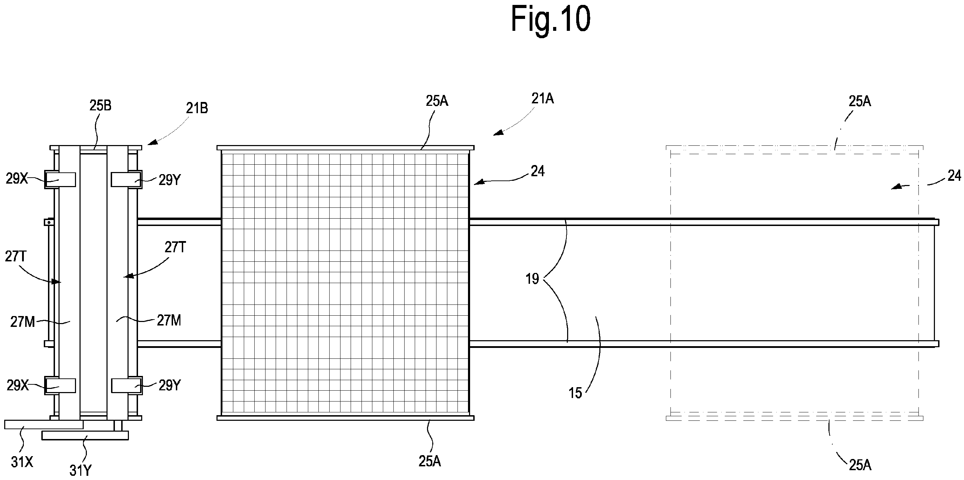

Each supporting member 27 can have its own clamping systems, for example of pneumatic or mechanical type. An exemplary embodiment of clamping systems for the supporting members 27 will be described below with reference to Figs. 7 to 10.

Figs.7 to 12 show an embodiment of the machining center 1 in which the supporting members 27 of the workpieces to be machined are provided with clamping systems that remain partially connected to the table portion 21 B. The machining center 1 of Figs. 7 to 10 is substantially the same as the machining center of Figs. 1 to 6. Identical or equivalent parts are indicated with the same reference numbers and will not be described again. Hereinafter, mainly parts that are different or additional with respect to those described with reference to Figs. 1 to 6 will be described.

In Fig.7, the references 29X and 29Y indicate two mechanical clamping systems for clamping the workpieces to be machined on the upper surfaces 27S of the two supporting members 27. The references 31X and 31Y generically indicate respective cable harnesses that connect the clamping systems 29X, 29Y to the second table portion 21 B. The term cable harnesses is intended as an assembly of flexible members for electrically and/or hydraulically and/or pneumatically supplying the components of the clamping systems. For example, there can be provided flexible pipes to supply compressed air and/or oil for piston-cylinder actuators, and electric power supplies and data lines for sensors, solenoid valves and the like. All the flexible members or components are contained in a flexible raceway, which, together with the aforesaid supply systems, defines the cable harness. Each cable harness 31X, 31Y can be connected with one end to the respective supporting member 27 and with the other end to the second table portion 21 B of the workpiece supporting table.

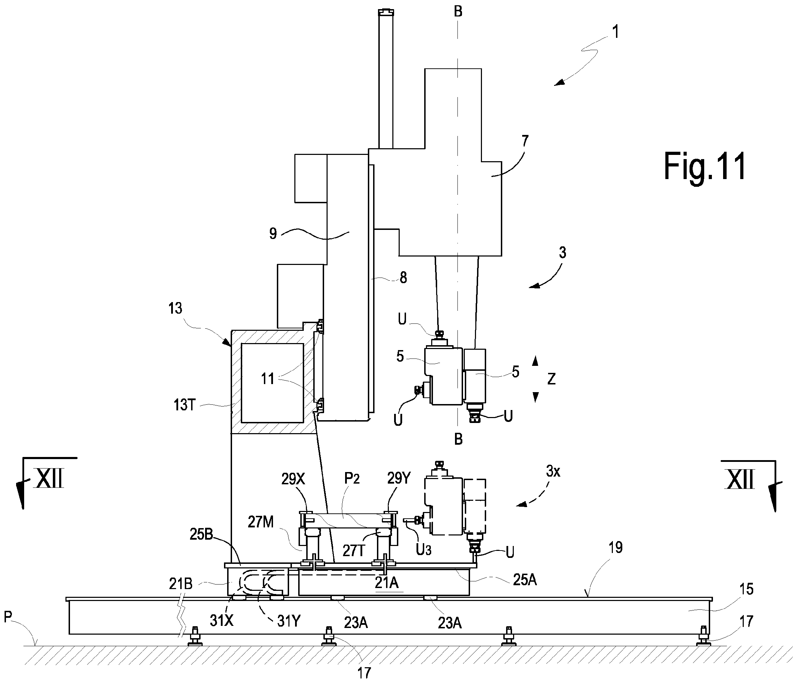

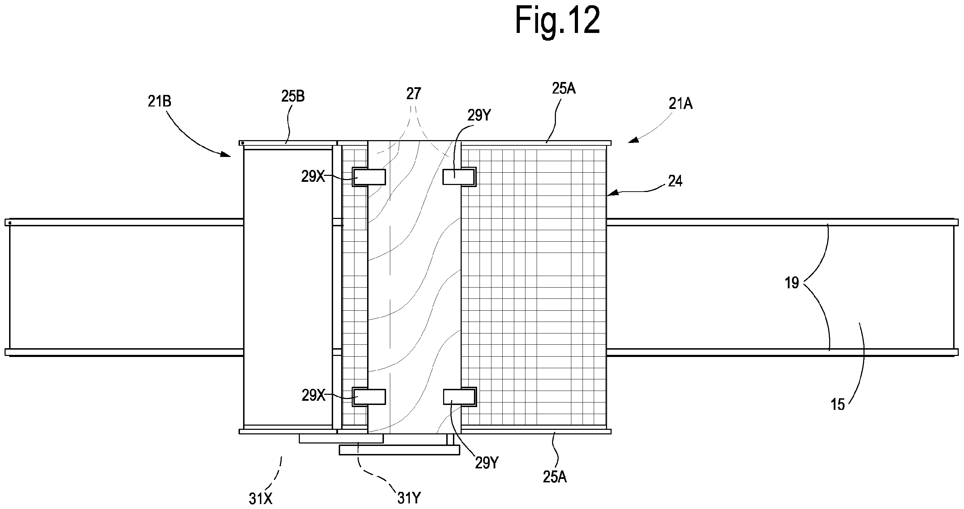

In this way, whatever the position of the supporting members 27, i.e. in machining position on the first portion 21A of the workpiece supporting table (Figs.11, 12) or in standby position on the second portion 21 B of the workpiece supporting table (Fig.7 - 10), the connection for feeding and controlling the clamping systems 29X, 29Y is always active and does not require to be disconnected or removed when the supporting members 27 pass from one to the other of the two portions 21 A, 21 B of the workpiece supporting table set next to one another.

This embodiment also provides for coupling of the second portion 21 B of the workpiece supporting table to the first portion 21A of the workpiece supporting table for carrying it in controlled movement along the numerically controlled axis Y by means of the portion 21A of the workpiece supporting table. In fact, it can be seen that in the configuration of Figs. 11 and 12, the two portions of the workpiece supporting table are both in the machining area of the machining head 3 and are set next to one another.

With this solution the machining center is simplified, reducing the number of numerically controlled actuators and programming thereof is facilitated. Moreover, it is possible to maintain a continuous connection between the supporting members 27 and the related clamping systems 29X, 29Y on one side and the second portion 21 B of the workpiece supporting table on the other, as the distance between the supporting members 27 and the second portion 21 B of the workpiece supporting table does not increase excessively, even when the supporting members 27 are mounted on the first portion 21A of the workpiece supporting table.

In the embodiments illustrated above, the second portion 21 B of the workpiece supporting table is movable along the guide 19. However, this is not essential. In other embodiments, the second portion 21 B of the workpiece supporting table can be mounted fixed with respect to the base 15 and only the first portion 21A of the workpiece supporting table is movable along the guide 19.

With one or other of the portions 21A, 21 B of the workpiece supporting table supporting members can be associated, which are more complex than those described with reference to the embodiments of Figs. 1 to 12. For example, one or more of the supporting members can comprise centers, preferably motorized, to perform turning operations with tools carried by the machining head 3. The function of these centers is to support a workpiece to be machined and to impart thereon a rotational movement about an axis. The centers can be mounted so as to be positioned on one or on the other of the table portions 21A, 21 B of the workpiece supporting table, depending upon the operations to be performed on the workpiece. In some embodiments, centers can also be associated with other simpler supporting members, for example clamps, vacuum tables, or a supporting and clamping member of the type described with reference to the embodiments of Figs. 1 to 12.

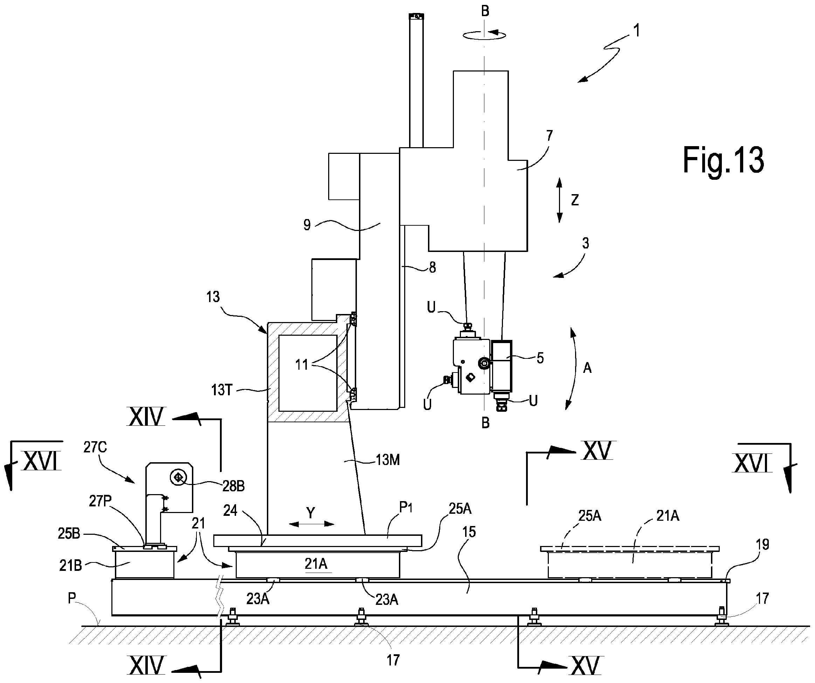

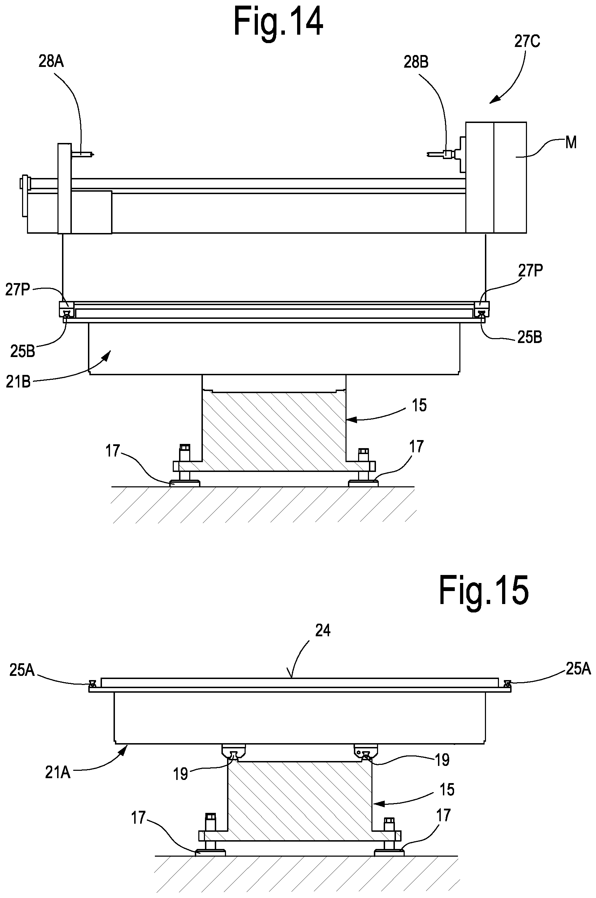

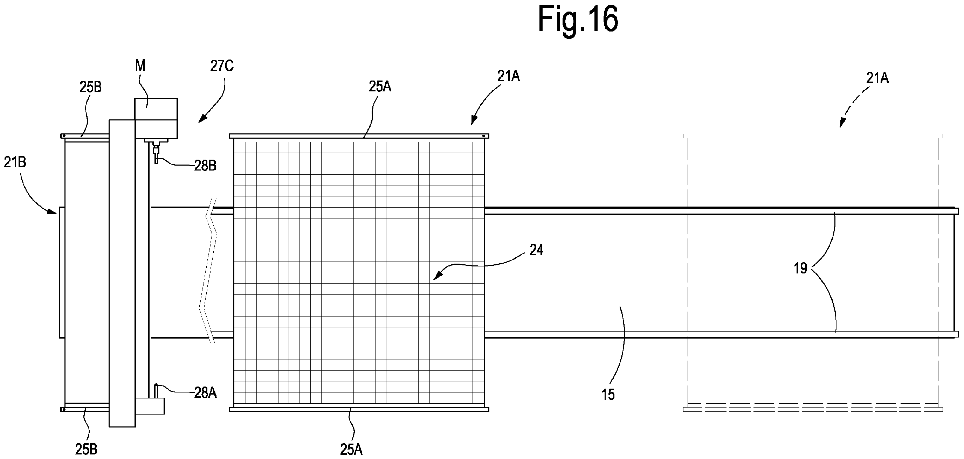

Figs. 13 to 16 show an embodiment of a machining center or machine tool 1 in which one of the supporting members is configured as a pair of centers, for example to perform turning operations. The same reference numbers indicate identical or equivalent parts to those of Figs.1 to 12, which will not be described in detail again.

In the embodiment of Figs. 13 to 16, a supporting member 27C comprising a pair of centers 28A, 28B is positioned on the second table portion 21 B of the workpiece supporting table.. At least one of the centers is motorized. In the embodiment shown, the center 28B is motorized by means of a motor M. The centers 28A, 28B form a clamping system of the workpiece to be machined, which allows it to rotate about an axis.

The two table portions 21A, 21 B of the workpiece supporting table comprise, analogously to the table portions 21A, 21 B of the workpiece supporting table of Figs. 1 to 12, auxiliary guides, indicated respectively with 25A and 25B. Just as in Figs. 1 to 12, in the embodiment of Figs. 13 to 16 the auxiliary guides 25A, 25B are also arranged substantially at the same height and each comprises, for example, a pair of guide elements, arranged at the same mutual distance. In some embodiments, the guide elements of the auxiliary guide 25A can consist of tracks, for example fitted along the edges of the first table portion 21A of the workpiece supporting table parallel to the guide 19, while the guide elements of the auxiliary guide 25B can consist of identical tracks, positioned along the edges of the table portion 21 B of the workpiece supporting table, again parallel to the guide 19.

Also in this embodiment, as described previously, the supporting member 27C can be transferred from one to the other of the two table portions 21A, 21 B of the workpiece supporting table. For this purpose, the two table portions 21A, 21 B of the workpiece supporting table can be set next to one another, due to the mutual movement along the guide 19, according to the numerically controlled axis Y. As the auxiliary guides 25A and 25B are positioned at the same height and the tracks of which they are formed are positioned at the same mutual distance, the supporting member 27C comprising the centers 28A, 28B can be transferred from the second table 21 B portion of the workpiece supporting table to the first table portion 21A of the workpiece supporting table. This operation can, for example, be performed if the workpiece to be machined is to be subjected to turning operations using tools carried by the machining head 3. The supporting member 27C is in this case translated from the second table portion 21 B of the workpiece supporting table to the first table portion 21A of the workpiece supporting table and by the latter under the machining head 3. When the centers 28A, 28B are no longer required, they can be translated from the portion table 21A of workpiece supporting table to the table portion 21 B.

The embodiment of Figs. 13 to 16 shows a single supporting member 27C, with centers 28A, 28B. In other embodiments, there could be provided several supporting members 27, which can be movable from one to the other of the portions 21A, 21 B of the workpiece supporting table by means of translation along the auxiliary guides 25A, 25B, when they are set next to one another and aligned.

In the embodiment of Figs. 13 to 16, the table portion 21 B of the workpiece supporting table is fixed with respect to the base 15, contrary to the table portion 21 B of the workpiece supporting table in the embodiments of Figs. 1 to 12. However, in other embodiments, the table portion 21 B of the workpiece supporting table could also be movable according to the axis Y.

Vice versa, also in the embodiment of Figs. 1 to 12, the table portion 21 B of the workpiece supporting table could be fixed with respect to the base 15.

It is understood that the drawing only shows a possible embodiment of the invention, which may vary in forms and arrangements, without however departing from the scope of the concept on which the invention is based. Any reference numerals in the appended claims are provided purely to facilitate the reading thereof, in the light of the above description and of the accompanying drawings, and do not in any way limit the scope of protection.

## Claims

1. A machining center (1) for machining workpieces (P1, P2), comprising a machining head (3), movable according to a plurality of numerically controlled axes (A, B, X, Z), and a base (15) associated with the machining head (3), wherein:
a guide (19) is arranged along the base (15);
at least one workpiece supporting table (21), divided into a first table portion (21A) and a second table portion (21 B), is combined with the guide (19);
at least the first table portion (21A) is movable according to a numerically controlled axis (Y), along the guide (19) arranged on the base (15);
a first clamping system (24) of workpieces to be machined (P1, P2) is combined with the first table portion (21 A);
respective auxiliary guides (25A, 25B) parallel to the guide (19) arranged on the base (15) are combined with the first table portion (21A) and with the second table portion (21 B) ; the auxiliary guides of the first table portion and the auxiliary guides of the second table portion being arranged and configured so as to abut against one another, being arranged in mutual alignment, when the two table portions are set next to one another;
at least one supporting member (27; 27C) of the workpieces to be machined (P1, P2) is combined with the workpiece supporting table (21); the supporting member (27; 27C) being provided with guide elements (27P) for engaging with the auxiliary guides (25A, 25B) of the first table portion (21A) and of the second table portion (21 B), so that the supporting member can be transferred from one to the other of the two table portions; and each supporting member being provided with a respective clamping system (27X, 27Y; 28A, 28B) of the workpieces to be machined.

2. The machining center as claimed in claim 1, wherein the auxiliary guides (25A, 25B) combined with the first table portion (21A) and with the second table portion (21 B) are positioned at a same height with respect to the base (15).

3. The machining center as claimed in claim 1, comprising at least two supporting members (27) independent from one another.

4. The machining center as claimed in claim 1, 2 or 3, wherein the auxiliary guides (25A, 25B) combined with the first table portion (21A) and with the second table portion (21 B) each comprise a pair of tracks.

5. The machining center as claimed in claim 4, wherein the tracks of each pair are arranged along longitudinal edges of the respective table portion parallel to the guide (19) arranged on the base (15).

6. The machining center as claimed in claim 4 or 5, wherein the two pairs of tracks of the auxiliary guides (25A, 25B) are positioned at the same mutual distance.

7. The machining center as claimed in one or more of the preceding claims, wherein also the second table portion (21 B) is movable along the guide (19) arranged on the base (15).

8. The machining center as claimed in claim 7, wherein the first table portion (21 A) is constrainable to the second table portion (21 B) so that the first table portion (21A) and the second table portion (21 B) are mutually joined, so that the second table portion is moved along the guide (19) arranged on the base (15) by means of actuators that control the movement of the first table portion (21 A).

9. The machining center as claimed in claim 7 or 8, wherein the second clamping systems (27X, 27Y, 28A, 28B) provided on the support members (27; 27C) of the workpieces to be machined comprise a cable harness (31X, 31Y) with a first end constrained to the respective supporting member (27X, 27Y; 28A, 28B) and a second end constrained to the second table portion (21 B).

10. The machining center as claimed in one or more of the preceding claims, wherein each supporting member (27) comprises a beam (27T) mountable in a substantially transverse position with respect to the guide (19) arranged on the base (15).

11. The machining center as claimed in one or more of the preceding claims, wherein each supporting member (27) forms a supporting surface (27S) of the workpiece to be machined and comprises spacers (27M) for spacing the supporting surface (27S) from a receiving surface of the workpieces to be machined provided on the workpiece supporting table (21).

12. The machining center as claimed in claims 10 and 11, wherein each beam (27T) comprises uprights (27M) forming spacers for spacing the supporting surface (27S) from the receiving surface.

13. The machining center as claimed in claim 12, wherein the uprights (27M) are arranged between the respective beam (27T) forming the supporting surface (27S) and the underlying receiving surface of the workpieces to be machined (P1, P2) provided on the workpiece supporting table (21).

14. The machining center as claimed in claim 12 or 13, wherein said uprights (27M) are provided with sliding blocks (27P) engaged with the auxiliary guides (25A, 25B) alternatively of the first table portion (21 A) or of the second table portion (21 B).

15. The machining center as claimed in one or more of the preceding claims, wherein the base (15) has a constant transverse cross section for the whole of the length on which the guides (19) extend, wherealong the workpiece supporting table (21) is movable; said base preferably being manufactured by extrusion.

16. The machining center as claimed in one or more of the preceding claims, wherein said at least one supporting member (27C) comprises a pair of centers (28A, 28B) forming the clamping system for the workpieces to be machined.

## Patentansprüche

1. Bearbeitungszentrum (1) zum Bearbeiten von Werkstücken (P1, P2), das einen Bearbeitungskopf (3), der entsprechend einer Anzahl numerisch gesteuerter Achsen (A, B, X, Z) beweglich ist, und eine Basis (15), die mit dem Bearbeitungskopf (3) verbunden ist, umfasst, wobei:
eine Führung (19) entlang der Basis (15) angeordnet ist;
mindestens ein Werkstück-Auflagetisch (21), geteilt in einen ersten Tischteil (21A) und einen zweiten Tischteil (21B), mit der Führung (19) kombiniert ist;
mindestens der erste Tischteil (21A) entsprechend einer numerisch gesteuerten Achse (Y), entlang der Führung (19), die auf der Basis (15) angeordnet ist, beweglich ist;
ein erstes Spannsystem (24) von zu bearbeitenden Werkstücken (P1, P2) mit dem ersten Tischteil (21A) kombiniert ist;
jeweilige Hilfsführungen (25A, 25B) parallel zu der auf der Basis (15) angeordneten Führung (19) mit dem ersten Tischteil (21A) und mit dem zweiten Tischteil (21B) kombiniert sind; die Hilfsführungen des ersten Tischteils und die Hilfsführungen des zweiten Tischteils so angeordnet und aufgebaut sind, dass sie aneinander angrenzen, in gegenseitiger Ausrichtung angeordnet, wenn die zwei Tischteile nebeneinander gesetzt sind;
mindestens ein Tragelement (27; 27C) der zu bearbeitenden Werkstücke (P1, P2) mit dem Werkstück-Auflagetisch (21) kombiniert ist; das Tragelement (27; 27C) mit
Führungselementen (27P) zum Eingreifen in die Hilfsführungen (25A, 25B) des ersten Tischteils (21A) und des zweiten Tischteils (21B) versehen ist, sodass das Tragelement von einem zu dem anderen der zwei Tischteile versetzt werden kann;
und jedes Tragelement mit einem jeweiligen Spannsystem (27X, 27Y; 28A, 28B) der zu bearbeitenden Werkstücke versehen ist.

2. Bearbeitungszentrum gemäß Anspruch 1, wobei die Hilfsführungen (25A, 25B) kombiniert mit dem ersten Tischteil (21A) und mit dem zweiten Tischteil (21B) auf einer selben Höhe hinsichtlich der Basis (15) positioniert sind.

3. Bearbeitungszentrum gemäß Anspruch 1, das mindestens zwei Tragelemente (27), unabhängig voneinander, umfasst.

4. Bearbeitungszentrum gemäß Anspruch 1, 2 oder 3, wobei die Hilfsführungen (25A, 25B) kombiniert mit dem ersten Tischteil (21A) und mit dem zweiten Tischteil (21B) jeweils ein Paar Schienen umfassen.

5. Bearbeitungszentrum gemäß Anspruch 4, wobei die Schienen von jedem Paar entlang Längsrändern des jeweiligen Tischteils parallel zu der Führung (19), die auf der Basis (15) angeordnet ist, angeordnet sind.

6. Bearbeitungszentrum gemäß Anspruch 4 oder 5, wobei die zwei Paare Schienen der Hilfsführungen (25A, 25B) im selben gegenseitigen Abstand angeordnet sind.

7. Bearbeitungszentrum gemäß einem oder mehreren der vorhergehenden Ansprüche, wobei auch der zweite Tischteil (21B) entlang der Führung (19), die auf der Basis (15) angeordnet ist, beweglich ist.

8. Bearbeitungszentrum gemäß Anspruch 7, wobei der erste Tischteil (21A) an den zweiten Tischteil (21B) arretierbar ist, sodass der erste Tischteil (21A) und der zweite Tischteil (21B) gegenseitig verbunden sind, sodass der zweite Tischteil entlang der Führung (19), die auf der Basis (15) angeordnet ist, mittels Aktoren, welche die Bewegung des ersten Tischteils (21A) steuern, bewegt wird.

9. Bearbeitungszentrum gemäß Anspruch 7 oder 8, wobei die zweiten Spannsysteme (27X, 27Y, 28A, 28B), die auf den Tragelementen (27; 27C) der zu bearbeitenden Werkstücke bereitgestellt sind, einen Kabelbaum (31X, 31Y) mit einem ersten Ende, das an dem jeweiligen Tragelement (27X, 27Y; 28A, 28B) gehalten wird, und einem zweiten Ende, dass an dem zweiten Tischteil (21B) gehalten wird, umfasst.

10. Bearbeitungszentrum gemäß einem oder mehreren der vorhergehenden Ansprüche, wobei jedes Tragelement (27) einen Träger (27T) umfasst, der in einer im Wesentlichen quer verlaufenden Position hinsichtlich der Führung (19), die auf der Basis (15) angeordnet ist, montierbar ist.

11. Bearbeitungszentrum gemäß einem oder mehreren der vorhergehenden Ansprüche, wobei jedes Tragelement (27) eine Auflageoberfläche (27S) des zu bearbeitenden Werkstücks bildet und Abstandshalter (27M) zum Beabstanden der Auflageoberfläche (27S) von einer Aufnahmeoberfläche der zu bearbeitenden Werkstücke, die auf dem Werkstück-Auflagetisch (21) bereitgestellt ist, umfasst.

12. Bearbeitungszentrum gemäß den Ansprüchen 10 und 11, wobei jeder Träger (27T) Pfosten (27M) umfasst, die Abstandshalter zum Beabstanden der Auflageoberfläche (27S) von der Aufnahmeoberfläche bilden.

13. Bearbeitungszentrum gemäß Anspruch 12, wobei die Pfosten (27M) zwischen dem jeweiligen Träger (27T), der die Auflageoberfläche (27S) bildet, und der darunter liegenden Aufnahmeoberfläche der zu bearbeitenden Werkstücke (P1, P2), die auf dem Werkstück-Auflagetisch (21) bereitgestellt ist, angeordnet sind.

14. Bearbeitungszentrum gemäß Anspruch 12 oder 13, wobei die Pfosten (27M) mit Gleitblöcken (27P) versehen sind, die in die Hilfsführungen (25A, 25B) wahlweise des ersten Tischteils (21A) oder des zweiten Tischteils (21B) eingreifen.

15. Bearbeitungszentrum gemäß einem oder mehreren der vorhergehenden Ansprüche, wobei die Basis (15) einen konstanten querlaufenden Querschnitt für die gesamte Länge, auf der sich die Führungen (19) erstrecken, aufweist, entlang dessen der Werkstück-Auflagetisch (21) beweglich ist; wobei die Basis bevorzugt durch Extrusion hergestellt ist.

16. Bearbeitungszentrum gemäß einem oder mehreren der vorhergehenden Ansprüche, wobei das mindestens eine Tragelement (27C) ein Paar Zentrierspitzen (28A, 28B) umfasst, die das Spannsystem für die zu bearbeitenden Werkstücke bilden.

## Revendications

1. Un centre d'usinage (1) pour usiner des pièces (P1, P2) comprenant une tête d'usinage (3), déplaçable suivant une pluralité d'axes commandés numériquement (A, B, X, Z), et une base (15) associée avec la tête d'usinage (3), dans lequel :
un guide (19) est agencé le long de la base (15) ;
au moins une table de support de pièces (21), divisée en une première partie de table (21A) et une seconde partie de table (21B), est associée avec le guide (19) ;
au moins la première partie de table (21A) est déplaçable suivant un axe commandé numériquement (Y), suivant le guide (19) agencé sur la base (15) ;
un premier système de blocage (24) de pièces à usiner (P1, P2) est associé avec la première partie de table (21A) ;
des guides auxiliaires respectifs (25A, 25B) parallèles au guide (19) agencé sur la base (15) sont associés avec la première partie de table (21A) et avec la seconde partie de table (21B) ; les guides auxiliaires de la première partie de table et les guides auxiliaires de la seconde partie de table étant agencés et configurés de manière à venir en butée l'un contre l'autre, en étant alignés l'un avec l'autre, lorsque les deux parties de table sont placées l'une à côté de l'autre ;
au moins un organe de support (27 ; 27C) des pièces à usiner (P1, P2) est associé avec la table de support de pièces (21) ; l'organe de support (27 ; 27C) étant muni d'éléments de guidage (27P) pour venir en prise avec les guides auxiliaires (25A, 25B) de la première partie de table (21A) et de la seconde partie de table (21B), de manière à ce que l'organe de support puisse être transféré de l'une à l'autre des deux parties de table ; et chaque organe de support étant pourvu d'un système de blocage respectif (27X, 27Y ; 28A, 28B) des pièces à usiner.

2. Le centre d'usinage selon la revendication 1, dans lequel les guides auxiliaires (25A, 25B) associés avec la première partie de table (21A) et avec la seconde partie de table (21B) sont positionnées à la même hauteur que la base (15).

3. Le centre d'usinage selon la revendication 1, comprenant au moins deux organes de support (27) indépendants l'un de l'autre.

4. Le centre d'usinage selon la revendication 1, 2 ou 3, dans lequel les guides auxiliaires (25A, 25B) associées avec la première partie de table (21A) et avec la seconde partie de table (21B) comprennent chacun une paire de rails.

5. Le centre d'usinage selon la revendication 4, dans lequel les rails de chaque paire sont agencés le long de bords longitudinaux de la partie de table respective parallèle au guide (19) agencé sur la base (15).

6. Le centre d'usinage selon la revendication 4 ou 5, dans lequel les deux paires de rails des guides auxiliaires (25A, 25B) sont positionnées à la même distance l'une de l'autre.

7. Le centre d'usinage selon une ou plusieurs des revendications précédentes, dans lequel la seconde partie de table (21B) est aussi déplaçable le long du guide (19) agencé sur la base (15).

8. Le centre d'usinage selon la revendication 7, dans lequel la première partie de table (21A) peut être reliée à la seconde partie de table (21B) de sorte que la première partie de table (21A) et la seconde partie de table (21B) soient jointes l'une à l'autre, de manière à ce que la seconde partie de table soit déplacée le long du guide (19) agencé sur la base (15) au moyen d'organes d'actionnement qui commandent le mouvement de la première partie de table (21A).

9. Le centre d'usinage selon la revendication 7 ou 8, dans lequel le second système de blocage (27X, 27Y, 28A, 28B) prévu sur les organes de support (27 ; 27C) des pièces à usiner comprend une fixation de câble (31X, 31Y) avec une première extrémité reliée à l'organe de support respectif (27X, 27Y ; 28A, 28B) et une seconde extrémité reliée à la seconde partie de table (21B).

10. Le centre d'usinage selon une ou plusieurs des revendications précédentes, dans lequel chaque organe de support (27) comprend une poutrelle (27T) qui peut être montée en position sensiblement transversale par rapport au guide (19) agencé sur la base (15).

11. Le centre d'usinage selon une ou plusieurs des revendications précédentes, dans lequel chaque organe de support (27) forme une surface de support (27S) de la pièce à usiner et comprend des entretoises (27M) pour espacer la surface de support (27S) d'une surface de réception des pièces à usiner prévue sur la table de support de pièces (21).

12. Le centre d'usinage selon les revendications 10 et 11, dans lequel chaque poutrelle (27T) comprend des montants (27M) formant des entretoises pour espacer la surface de support (27S) de la surface de réception.

13. Le centre d'usinage selon la revendication 12, dans lequel les montants (27M) sont agencées entre la poutrelle respective (27T) formant la surface de support (27S) et la surface de réception sous-jacente des pièces à usiner (P1, P2) prévue sur la table de support de pièces (21).

14. Le centre d'usinage selon la revendication 12 ou 13, dans lequel lesdits montants (27M) sont prévus avec blocs coulissants (27P) en prise avec les guides auxiliaires (25A, 25B) soit de la première partie de table (21A) soit de la seconde partie de table (21B).

15. Le centre d'usinage selon une ou plusieurs des revendications précédentes, dans lequel la base (15) comporte une section transversale constante pour la totalité de la longueur sur laquelle les guides (19) s'étendent, le long de laquelle la table de support de pièces (21) est déplaçable ; ladite base étant de préférence fabriquée par extrusion.

16. Le centre d'usinage selon un ou plusieurs des revendications précédentes, dans lequel ledit ou lesdits organes de support (27C) comprend une paire de centres (28A, 28B) formant le système de blocage pour les pièces à usiner.
